# EUROPÄISCHE PATENTSCHRIFT

(11) **EP 1 564 579 B1**
(45) Veröffentlichungstag und Bekanntmachung des Hinweises auf die Patenterteilung: **16.11.2011**
(21) Anmeldenummer: 04405088.8
(22) Anmeldetag: 17.02.2004
(51) Int. Cl.: G02C 5/08

(54) **Faltbare Brille, Brillenetui und Anordnung der faltbaren Brille im Brillenetui**
Foldable spectacles, spectacles case and arrangement of the foldable spectacles in the spectacles case
Lunettes pliables, étui pour lunettes et arrangement des lunettes pliables dans leur étui.

(43) Veröffentlichungstag der Anmeldung: 17.08.2005
(73) Patentinhaber: Diamond SA, 6616 Losone (CH)
(72) Erfinder: Gerber, Hans, 6648 Minusio (CH); Combi, Maurizio, 28922 Verbania Biganzolo (VB) (IT); Nizzola, Luca, 6598 Tenero (CH)
(74) Vertreter: Hepp Wenger Ryffel AG

(56) Entgegenhaltungen:
- DE-U- 29 712 271
- US-A- 4 720 186
- US-A- 5 896 185
- US-B1- 6 315 408

## Beschreibung

Vorliegende Erfindung betrifft eine faltbare Brille gemäss dem Oberbegriff von Anspruch 1, ein Brillenetui gemäss dem Oberbegriff von Anspruch 13 und eine Anordnung der faltbaren Brille im Brillenetui gemäss Oberbegriff von Anspruch 17.

Ein Problem für einen Brillenträger, insbesondere für einen weitsichtigen Brillenträger, der eine Lesebrille benötigt, besteht im Verlorengehen, Verlegen oder Vergessen seiner nicht ständig benötigten Brille. Deshalb besteht ein Bedürfnis für eine platzsparende Brille, welche bei Nichtgebrauch möglichst klein und flach untergebracht werden kann.

US 4,840,476 beschreibt eine faltbare Nasenbrille ohne Bügel, bei welcher zwei in einer Ebene liegende Brillengläser ohne Rahmen durch einen U-förmigen Nasenbügel verbunden sind, wobei die Verbindung der Brillengläser mit dem Nasenbügel mittels eines in einer Bohrung jedes Brillenglases eingeführten Gelenkbolzens erfolgt. Diese Gelenkbolzen dienen auch als Scharniere zum Zusammenfalten der Brille. Die Bohrungen befinden sich bezüglich der Tragposition der Brille in einem der Nase zugewandten, unteren Bereich der Brillengläser. Die Anordnung der Scharniere und der dazugehörenden Brillengläser ist derart, dass die Brillengläser aus der Tragposition durch eine 90° Drehung um eine zur Ebene der Brillengläser senkrechte, durch das Scharnier verlaufende Drehachse in eine kompakte Aufbewahrungsposition gebracht werden können, wobei die bezüglich der Tragposition oberen Kanten der Brillengläser in der kompakten Aufbewahrungsposition einander zumindest teilweise berühren. Dabei befinden sich die Brillengläser in der Tragposition, wie auch in der kompakten Aufbewahrungsposition immer in derselben Ebene.

Die Brillengläser der Nasenbrille gemäss US 4,840,476 müssen zum Auf- und Zuklappen mit beiden Händen angefasst werden, so dass die Gefahr einer Verschmutzung der Sichtfläche durch Fingerabdrücke recht gross ist. Zudem muss eine aus der Tragposition auf eine Unterlage abgelegte Brille zum Auf- wie zum Zusammenklappen im Allgemeinen von der Unterlage angehoben werden, oder ein Brillenglas muss zumindest so stark festgehalten werden, dass eine Drehung des anderen Brillenglases durchführbar ist.

US 4,720,186 beschreibt eine faltbare Brille mit eingerahmten Brillengläsern und beidseits vorhandenen Bügeln. Der Nasensteg, welcher die eingerahmten Brillengläser miteinander verbindet, weist mittig ein Scharnier auf, welches ein Zusammenfalten der Brille durch eine Schwenkung der Brillengläser um eine Achse senkrecht zur Ebene der Brillengläser aus der Tragposition um 90° nach oben erlaubt. Die bezüglich der Tragposition oberen Kanten der eingerahmten Brillengläser berühren einander in der zusammengefalteten Aufbewahrungsposition zumindest teilweise. Dabei befinden sich die Brillengläser in der Tragposition, wie auch in der zusammengefalteten Aufbewahrungsposition immer in derselben Ebene. Die Bügel sind ohne Gelenk mit den eingerahmten Brillengläsern verbunden, weisen jedoch ein biegbares Zwischenstück auf. Die faltbare Brille gemäss US 4,720,186 ist dermassen ausgebildet, dass die eingrahmten Brillengläser im zusammengefalteten Zustand in ein Uhrengehäuse passen, wobei die Bügel frei aus dem Uhrengehäuse ragen und entlang der Aussenseite des Uhrenarmbandes geführt werden, wobei am Uhrenarmband auch Befestigungsmittel für die Bügelenden vorgesehen sind. Damit eignet sich eine solche Brille nicht für eine Aufbewahrung in einem flachen Gehäuse Aufgabe vorliegender Erfindung ist die Bereitstellung einer faltbaren Brille, welche gesamthaft platzsparend in einem möglichst flachen Brillenetui untergebracht werden kann, ohne dass sich die bezüglich der Tragposition oberen Kanten der Brillengläser in der kompakten Aufbewahrungsposition berühren. Um eine Verschmutzung der Sichtflächen der faltbaren Brille möglichst zu vermeiden, besteht eine weitere Aufgabe darin, eine faltbare Brille bereitzustellen, bei welcher das Auf- und Zusammenfalten der beiden Brillengläser mit möglichst wenig Fingerdruckpunkten erfolgen kann.

Erfindungsgemäss wird diese Aufgabe durch eine faltbare Brille gelöst, welche die Merkmale von Anspruch 1 aufweist.

Die faltbare Brille gemäss vorliegender Erfindung hat gegenüber den aus dem Stand der Technik bekannten Brillen den Vorteil, dass eine aus der Tragposition auf eine Unterlage abgelegte faltbare Brille nur an einem Brillenglas resp. an dessen Rahmen gehalten werden muss und dann gefaltet werden kann, wobei das andere Brillenglas in derselben Position auf der Unterlage liegen bleiben kann, und das Halten des auf der Unterlage liegen bleibenden Brillenglases in seiner Position keine Krafteinwirkung, sprich keine Fingerdruckpunkte, benötigt.

Jedes Brillenglas weist eine konzentrische Längsachse *la, lb* und eine dazu senkrechte Querachse *ta, tb* auf. Die konzentrischen Längs- und Querachsen eines Brillenglases teilen dessen Sehfläche in vier gleich grosse Teilflächen. Die Ebene durch die konzentrischen Längs- und Querachsen eines Brillenglases bildet die Ebene des entsprechenden Brillenglases. Die konzentrischen Querachsen *ta, tb* beider Brillengläser liegen im aufgefalteten Brillenzustand üblicherweise immer parallel zueinander. Die konzentrischen Längsachsen *la, lb* beider Brillengläser können im aufgefalteten Brillenzustand auf einer Geraden liegen, oder können einen nur wenig von einem 180° Winkel abweichenden Winkel einschliessen. Im aufgefalteten Brillenzustand schliessen die beiden konzentrischen Längsachsen *la, lb* der Brillengläser zweckmässigerweise einen Winkel zwischen 170° bis 180°, bevorzugt 176° bis 180° ein, oder sie befinden sich auf einer Geraden. Im Weiteren wird deshalb mit dem Begriff "Ebene eines Brillenglases" im Zusammenhang mit der aufgefalteten Brille, d.h. mit der Brille im Zustand der Tragposition, stets auch die Ebene durch beide Brillengläser mitumfasst, wobei genau genommen, eine solche Ebene oft eine leicht gekrümmte Fläche darstellt.

In der Tragposition der faltbaren Brille weist jedes Brillenglas eine vom Brillenträger aus gesehene, äussere und eine innere Brillenglasfläche auf. Nach einer Drehfaltung, nach der beide Brillengläser wiederum in dieselbe Ebene zu liegen kommen, befindet sich jeweils eine äussere Brillenglasfläche des einen Brillenglases und eine innere Brillenglasfläche des anderen Brillenglases in derselben Ebene. Im gefalteten Zustand schliessen die beiden konzentrischen Längsachsen *la, lb* der Brillengläser einen Winkel von (180° - 2 β) miteinander ein.

Die in der Ebene der Brillengläser verlaufende Verbindungsachse *l'* der beiden Brillengläser kann mit einer konzentrischen Längsachse des Nasenstegs zusammenfallen, wobei dies insbesondere dann der Fall ist, wenn der Nasensteg und das Faltgelenk gegenüber der Verbindungsachse *l'* symmetrisch ausgebildet sind.

Die erfindungsgemässe, faltbare Brille kann gerahmte oder ungerahmte Brillengläser umfassen. Bei Verwendung von ungerahmten Brillengläsern enthält der Nasensteg üblicherweise zwei in jedes Brillenglas eingelassene Stegstifte, welche miteinander über das Faltgelenk verbunden sind. Bei Verwendung gerahmter Brillengläser bildet der Nasensteg üblicherweise Teil des Brillengestells, wobei der Nasensteg das erfindungsgemässe Faltgelenk enthält.

In einer bevorzugten Ausführungsform der faltbaren Brille weist das Faltgelenk zwei Faltgelenkteile auf, die je eine Scharnierfläche aufweisen. Im zusammengebauten Zustand der faltbaren Brille liegen die Scharnierflächen der beiden Faltgelenkteile aufeinander. Die Drehachse *m* steht dabei immer senkrecht zu den Scharnierflächen. Demgemäss fallen auch die Flächennormalen auf die Scharnierflächen mit der Drehachse *m* zusammen. Die beiden Faltgelenkteile sind mit einem Befestigungsmittel, beispielsweise mittels einer Schraubverbindung, lösbar miteinander verbunden.

Bevorzugt ist die Verbindung zwischen den beiden Faltgelenkteilen mit einem Federelement in Richtung der Drehachse vorgespannt, so dass einerseits eine Drehung der beiden Brillengläser um die Drehachse *m* möglich ist und andererseits die beiden Brillengläser in der Trag- und Faltposition ausreichend aneinander festgelegt sind, so dass eine ungewollte Drehung vermieden wird.

Weiter bevorzugt können die Scharnierflächen des Faltgelenks, beispielsweise durch eine kegelstumpfförmige, querschnittlich trapezförmige Gestalt, derart ausgebildet sein, dass eine seitliche Fixierung der beiden Faltgelenkteile gewährleistet wird, so dass das Befestigungsmittel für die beiden Faltgelenkteile nur die Kräfte in axialer Richtung des Faltgelenks aufnehmen muss.

Der spitze Winkel β zwischen der Verbindungsachse *l'* und der Drehachse *m* beträgt beispielsweise 30° bis 60° und bevorzugt 40° bis 50°.

Die Brille kann als Nasenbrille ohne Bügel ausgebildet sein. Bevorzugt wird jedoch eine Ausrüstung mit vorzugsweise zwei Bügeln. Die Bügel können einstückig oder mehrstückig ausgebildet sein, wobei ein mehrstückiger Bügel üblicherweise ein Scharnier zwischen den einzelnen Bügelstücken aufweist. Die Bügel können aus formfestem oder biegbarem Material bestehen. Insbesondere einstückige Bügel sind jedoch wenigestens abschnittweise biegbar ausgebildet. Die Bügel können am Brillenglas oder am Rahmen bzw. der Fassung des Brillenglases, beispielsweise mittels Schrauben, lösbar befestigt sein, oder der Bügel kann auch integraler Teil eines einstückigen Brillengestells sein. Die Befestigung des Bügels am Brillenglas oder am Rahmen des Brillenglases kann auch über ein Bügelscharnier erfolgen.

Bevorzugt werden die Bügel mittels einem Bügelscharnier an einer am Brillenglas oder am Rahmen des Brillenglases festgelegten Bügelhalterung befestigt. Im Weiteren werden mit dem Ausdruck "Brillenglas" immer die beiden Ausführungsvarianten, nämlich Brillenglas mit Brillenfassung bzw. Rahmen und Brillenglas ohne Brillenfassung bzw. Rahmen zusammengefasst.

In einer bevorzugten Ausführungsform werden die Bügel mittels einem Bügelscharnier an einer am Brillenglas festgelegten Bügelhalterung derart befestigt, dass der Bügel aus einer im Wesentlichen senkrecht zur Ebene der Brillengläser liegenden Tragposition, insbesondere aus einer zur Ebene der Brillengläser senkrechten Ebene, welche beispielsweise mittig durch beide Bügelscharniere verläuft, vollständig in die Ebene des anliegenden Brillenglases gedreht werden kann. Der Ausdruck "vollständig" bedeutet in diesem Zusammenhang, dass der Bügel neben das Brillenglas zu liegen kommt; dies im Gegensatz zu einem Bügel, welcher nach dem Zusammenklappen auf ein Brillenglas, d.h. in eine zur Brillenglas-Ebene parallelen Ebene, zu liegen kommt.

In einer weiteren bevorzugten Ausführungsform der Faltbrille ist die Bügelhalterung an einem Ende am Brillenglas befestigt, wobei das andere Ende der Bügelhalterung eine Drehbuchse aufweist, und das gegen das Bügelscharnier gerichtete Ende des Bügels weist bevorzugt eine gabelförmige Anformung mit zwei im Abstand angeordneten Lappen auf, welche Ausnehmungen, wie beispielsweise Bohrungen, zur Aufnahme eines Drehzapfens aufweisen, wobei das eine Ende der Bügelhalterung mit der Drehbuchse zwischen den beiden Lappen der gabelförmigen Anformung liegt, und die Drehbuchse und die Bohrungen der gabelförmigen Anformung einen durchgehenden Drehzapfen aufnehmen, so dass der Bügel drehbar an der Bügelhalterung gelagert ist. Die erfindungsgemässe Ausgestaltung des Bügelscharniers umfasst jedoch auch die umgekehrte Gelenkkonfiguration, bei der die scheibenförmige Anformung mit der Drehbuchse Teil des Bügels und die gabelförmige Anformung Teil der Bügelhalterung ist.

Weiter bevorzugt ist das die Drehbuchse enthaltende Ende der Bügelhalterung als scheibenförmiges Arretierelement mit einer parallel zur Drehachse durch die Drehbuchse verlaufenden Umlauffläche ausgebildet. Dabei kann das Arretierelement eine blatt- oder scheibenförmige Anformung der Bügelhalterung betreffen, welche in der Draufsicht aus Richtung der durch die Drehbuchse verlaufenden Drehachse beispielsweise einen teilkreisförmigen oder polygonförmigen Querschnitt aufweist. Die Umlauffläche weist bevorzugt zwei muldenförmige Vertiefungen zur Aufnahme eines federnden Rastelements, insbesondere einer Stiftspitze eines aus dem gegen das Bügelscharnier gerichtete Ende des Bügels austretenden, mit dem Bügeln über ein Druckelement verbundenen Stiftes auf. Dabei kann das Druckelement beispielsweise eine Druckfeder oder ein pneumatisches Druckelement sein. Die muldenförmigen Vertiefungen können beispielsweise in Richtung der Drehachse des Bügelscharniers verlaufende, nutartige Vertiefungen sein, die beispielsweise querschnittlich eine halbkreisförmige Ausgestaltung aufweisen. Die beiden muldenförmigen Vertiefungen sind bezüglich der durch die Drehbuchse verlaufenden Drehachse bevorzugt in einem Winkel von etwa 90° derart angeordnet, dass die eine muldenförmige Vertiefung zur lösbaren Arretierung des Bügels in der Tragposition der Brille dient, und die andere muldenförmige Vertiefung zur lösbaren Arretierung des in die Ebene des anliegenden Brillenglases gedrehten Bügels dient.

In einer weiter bevorzugten Ausführungsform der Faltbrille sind die Bügel zweiteilig ausgeführt, wobei jeder Bügel in einen dem Bügelscharnier anliegenden Längsbügel und einen Ohrenbügel unterteilt wird, und die beiden Bügelteile durch ein Zwischenscharnier miteinander verbunden sind. Bevorzugt ist das Zwischenscharnier derart ausgestaltet, dass es einerseits eine gestreckte,lösbar arretierte Bügelkonfiguration erlaubt, in welcher der Längsbügel und wenigstens ein an das Zwischenscharnier anliegender Bereich des Ohrenbügels auf derselben Achse liegen, und andererseits eine zur gestreckten Bügelkonfiguration in der Tragposition der Brille etwa im rechten Winkel geknickte, lösbar arretierbare Position des Ohrenbügels erlaubt. Eine solche Unterteilung des Bügels ermöglicht eine kompaktere Aufbewahrungsform der Faltbrille.

Bevorzugt weist das Zwischenscharnier eine Rastvorrichtung für die lösbare Arretierung des Ohrbügels in der gestreckten bzw. in der abgewinkelten Lage auf. Diese Rastvorrichtung kann derart ausgebildet sein, dass das gegen den Ohrenbügel gerichtete Ende des Längsbügels eine scheibenförmige Anformung mit einer Drehbuchse aufweist und das gegen den Längsbügel gerichtete Ende des Ohrenbügels eine gabelförmige Anformung mit zwei im Abstand angeordneten Lappen aufweist, welche Ausnehmungen, wie beispielsweise Bohrungen, zur Aufnahme eines Drehzapfens aufweisen. Dabei liegt die scheibenförmige Anformung zwischen den beiden Lappen der gabelförmigen Anformung, wobei die Drehbuchse und die Bohrungen der gabelförmigen Anformung einen durchgehenden Drehzapfen aufnehmen, so dass der Ohrenbügel drehbar am Längsbügel gelagert ist. Die erfindungsgemässe Ausgestaltung des Zwischenscharniers umfasst jedoch auch die umgekehrte Gelenkkonfiguration, bei der die scheibenförmige Anformung mit der Drehbuchse eine Anformung des Ohrenbügels und die gabelförmige Anformung Teil des Längsbügels ist.

Das Arretierelement kann eine blatt- oder scheibenförmige Anformung des Längsbügels betreffen, welche in der Draufsicht aus Richtung der durch die Drehbuchse verlaufenden Drehachse beispielsweise einen teilkreisförmigen oder polygonförmigen Querschnitt aufweist. Die Umlauffläche, d.h. die zur Drehachse des Zwischenscharniers parallele, um das Arretierelement herumlaufende Fläche, weist bevorzugt zwei muldenförmige Vertiefungen zur Aufnahme einer Stiftspitze eines aus dem gegen das Zwischenscharnier gerichtete Ende des Ohrenbügels austretenden, mit dem Ohrenbügel über ein Druckelement verbundenen Stiftes auf. Dabei kann das Druckelement beispielsweise eine Druckfeder oder ein pneumatisches Druckelement sein. Die muldenförmigen Vertiefungen können beispielsweise parallel zur Drehachse des Zwischenscharniers verlaufende nutartige Vertiefungen sein, die beispielsweise querschnittlich eine halbkreisförmige Ausgestaltung aufweisen. Die muldenförmigen Vertiefungen sind bezüglich der durch die Drehbuchse verlaufenden Drehachse bevorzugt in einem Winkel von etwa 90° derart angeordnet, dass die eine muldenförmige Vertiefung zur lösbaren Arretierung des Bügels in der gestreckten Tragposition und die andere muldenförmige Vertiefung zur lösbaren Arretierung des geknickten Bügels dient.

In einer noch weiteren bevorzugten Ausgestaltung der Faltbrille ist der Bügel als Teleskop ausgebildet. Dabei ist ein Teil des Bügels zweckmässigerweise rohrförmig und ein anderer Teil als Teleskopeinsatz, welcher in den rohrförmigen Teil eingeschoben werden kann, ausgebildet. Der Querschnitt der beiden Teleskopteile kann dabei beispielsweise rund, oval, polygonal oder rechteckförmig ausgebildet sein. Durch die Ausbildung des Bügels als Teleskop, kann der Bügel verlängert oder verkürzt werden.

Insbesondere bevorzugt wird der Längsbügel als Teleskop ausgebildet. Dabei weist der Längsbügel einen vorzugsweise zylinderförmigen Hohlraum auf, der zumindest in einem gegen den Ohrenbügel gerichteten Endbereich querschnittlich polygonal oder im Wesentlichen rechteckförmig ausgebildet ist und einen querschnittlich entsprechend polygonalen oder im Wesentlichen rechteckförmigen Teleskopeinsatz aufnimmt. Das eine Ende des Teleskopeinsatzes weist zweckmässigerweise die für das Zwischenscharnier benötigte Anformung auf. Der gegen den Ohrenbügel gerichtete, hohlzylinderförmige Endbereich des Längsbügels mit einem polygonalen oder rechteckförmigen Innenquerschnitt wird hierbei als Teleskop-Führungselement bezeichnet. Zwischen dem anderen Ende des Teleskopeinsatzes und dem entsprechenden Ende des zylinderförmigen Hohlraumes befindet sich vorzugsweise eine Teleskopfeder, welche den Teleskopeinsatz aus dem zylinderförmigen Hohlraum drückt.

Der Teleskopeinsatz ist querschnittlich polygonal oder im Wesentlichen rechteckförmig ausgebildet, so dass im Zusammenspiel mit dem Teleskop-Führungselement bezüglich der Längsachse des Längsbügels eine vordefinierte Drehposition des Teleskopeinsatzes und damit im Zusammenwirken mit dem Zwischenscharnier auch eine vordefinierte Drehposition des Ohrenbügels einstellbar ist.

In einer bevorzugten Ausführungsform ist der Teleskopeinsatz in einem Bereich unmittelbar vor der für das Zwischenscharnier benötigten Anformung bezüglich seiner Längsachse im Querschnitt verwunden. Dies bewirkt, dass der Teleskopeinsatz im Teleskop-Führungselement um seine Längsachse drehbar ist. Der Bereich des Teleskopeinsatzes unmittelbar vor der für das Zwischenscharnier benötigten Anformung kann beispielsweise rund oder polygonal sein, jedoch ist dessen Querschnitt gegenüber dem restlichen Querschnitt des Teleskopeinsatzes insbesondere kleiner. Dadurch wird eine Drehung des im Wesentlichen vollständig in den zylinderförmigen Hohlraum eingeführten Teleskopeinsatzes und damit des Ohrenbügels gegenüber dem rohrförmigen Längsbügel möglich.

In einer weiteren bevorzugten Ausführungsform weist der Teleskopeinsatz ein gedrehtes Längsprofil auf, so dass sich der Teleskopeinsatz während dem durch die Teleskopfeder bewirkten Herausstossen des Teleskopeinsatzes aus dem Drehelement aus der kompakten, zusammengestossenen Position in die Tragposition um einen vorgegebenen Winkel, beispielsweise um 90°, um die konzentrische Längsachse des Längsbügels dreht. Das Innenprofil des Drehelements ist dabei dem gedrehten Längsprofil des Teleskopeinsatzes angepasst.

Die auf das Brillenetui gerichtete Aufgabe betrifft die Bereitstellung eines möglichst flachen und kompakten Gehäuses zur Aufbewahrung einer Faltbrille, insbesondere einer Faltbrille mit an den Brillengläsern festgelegten Bügeln. Eine weitere Aufgabe besteht in der Vermeidung einer Verschmutzung der Brillengläser durch das Einlegen oder Herausnehmen der Brille aus dem Brillenetui, oder dem Zusammenfalten oder Auffalten der Brille.

Erfindungsgemäss wird diese Aufgabe durch ein Brillenetui gelöst, welches die Merkmale von Anspruch 13 aufweist.

Das Brillenetui kann beispielsweise aus einem formfesten Boden und einem Deckel bestehen, wobei Boden und Deckel je zwei Längs- und zwei Breitseiten aufweisen. Der Boden und der Deckel sind auf einer Längsseite durch ein Scharnier miteinander verbunden. Boden und Deckel sind bevorzugt baugleiche Teile mit derselben Funktion. Demgemäss sind in der weiteren Beschreibung die beiden Ausdrücke jeweils sinngemäss vertauschbar.

In einer bevorzugten Ausführungsform weisen die Gehäuseteile je eine umlaufende Auskragung auf, so dass ein flaches, kofferförmiges Brillenetui gebildet wird, welches bevorzugt einen quaderförmigen Hohlraum aufweist. Die Auskragungen der Gehäuseteile können auf der Seite des Scharniers je eine Ausnehmung zur Aufnahme des Faltgelenks der faltbaren Brille aufweisen.

Die umlaufende Auskragung bildet einen umlaufenden Rand, wobei insbesondere eine Ausnehmung für die Aufnahme des Faltgelenkes und gegebenenfalls auch Ausnehmungen zur teilweisen Aufnahme von Padstegen vorgesehen sind. Die umlaufende Auskragung weist bevorzugt einen quadratischen, rechteckigen oder trapezförmigen Querschnitt auf.

In einer bevorzugten Ausführungsform des Brillenetuis weist die umlaufende Auskragung zumindest in Teilbereichen einen gegen den Hohlraum des Etuis offenen Hohlrand für eine teilweise Aufnahme des Bügels auf, wobei die Gestalt des Hohlrandes derart gewählt ist, dass querschnittliche Teilbereiche des Bügels formgenau aufgenommen werden können.

Falls der Längsbügel einen im Wesentlichen runden Querschnitt aufweist, ist der Hohlrand an der dem Scharnier gegenüberliegenden Etuiseite querschnittlich beispielsweise halbrund ausgebildet, so dass beispielsweise der halbe Querschnitt des Längsbügels im Hohlrand untergebracht werden kann, was eine platzsparende Unterbringung des Längsbügels ermöglicht und zudem auch eine gewisse Fixierung des Längsbügels im Brillenetui gewährleistet.

In einer weiteren bevorzugten Ausführungsform des Brillenetuis enthält ein Gehäuseteil eine Öffnung, in die eine Lupe eingesetzt ist. Vorteilhaft ist die Lupe in eine Gehäuseteilöffnung eingesetzt, welche sich genau über einem Brillenglases befindet. So kann die Lupen-Vergrösserung durch das in das Brillenetui eingelegte Brillenglas verstärkt werden. Damit lässt sich das Brillenetui zumindest im aufgeklappten Zustand als Lupe benutzen; dies unabhängig davon, ob eine Brille in das Brillenetui eingelegt ist oder nicht.

Weiter bevorzugt weist der beim zusammengeklappten Brillenetui der Lupen-Öffnung gegenüberliegende Gehäuseteil eine entsprechend spiegelbildlich angeordnete Fensteröffnung auf. Die der Lupe gegenüberliegende Öffnung kann Brillenetui-innenseitig vom Brillenglas überdeckt sein oder nicht. Dies erlaubt die Verwendung des Brillenetuis als Lupe, wobei es dabei unerheblich ist, ob das Brillenetui auf- oder zugeklappt ist, oder ob eine Faltbrille darin eingelegt ist oder nicht.

In einer weiteren Ausgestaltung des Brillenetuis besteht wenigstens derjenige Gehäuseteil, der beim zusammengeklappten Brillenetui der Lupe gegenüber liegt, aus einem durchsichtigen Material. Damit kann auf eine der Lupe gegenüberliegende Öffnung verzichtet werden, wobei die Verwendung des Brillenetuis als Lupe im auf- und zugeklappten Zustand trotzdem gewährleistet ist; dies unabhängig davon, ob eine Brille in das Brillenetui eingelegt ist oder nicht.

Die Abmessungen des Brillenetuis sind bevorzugt derart, dass die Höhe des bevorzugt quaderförmigen Hohlraumes des Brillenetuis im zusammengeklappten Zustand im Wesentlichen der Dicke eines Brillenglases entspricht. Bei Brillenetuis zum Aufbewahren einer faltbaren Brille mit Bügeln wird die Länge des Hohlraumes bevorzugt im Wesentlichen durch die Länge der Längsbügel und die Breite des Hohlraumes im Wesentlichen durch die Länge der Ohrenbügel bestimmt, wobei die Wahl der Länge der Ohrenbügel zweckmässigerweise in Funktion der Brillenglaslänge gewählt wird.

Die auf die Anordnung der Faltbrille im Brillenetui gerichtete Aufgabe besteht darin, dass die Faltbrille möglichst flach und platzsparend in das Brillenetui eingelegt werden kann. Eine weitere Aufgabe besteht in der Gewährleistung des Auf- und Zusammenfaltens der erfindungsgemässen Brille durch das Auf- und Zusammenklappen des Brillenetuis.

Erfindungsgemäss wird diese Aufgabe durch eine Anordnung gelöst, welche die Merkmale von Anspruch 17 aufweist.

In der erfindungsgemässen Anordnung nimmt jedes Gehäuseteil ein Brillenglas auf, wobei die Brillengläser lösbar an den Gehäuseteilen festgelegt sind. Das Faltgelenk ist dabei derart angeordnert, dass dessen Drehachse mit der Scharnierachse des Brillenetuis zusammenfällt. Gegebenenfalls wird das Faltgelenk in entsprechende Ausnehmungen in den umlaufenden Auskragungen der Gehäuseteile gelegt.

Die Anordnung gemäss vorliegender Erfindung erlaubt ein Auffalten oder Zusammenfalten der im Brillenetui befestigten, faltbaren Brille durch das Öffnen oder Zusammenklappen des Brillenetuis. Die beiden Brillengläser kommen im gefalteten Zustand nebeneinander in dieselbe Ebene zu liegen. Die Längsachsen *la, lb* der beiden Brillengläser schliessen im gefalteten Zustand einen Winkel von (180°- 2 β) ein.

Eine weitere bevorzugte Ausgestaltung der Anordnung einer faltbaren, wenigstens einen Bügel enthaltenden Brille im Brillenetui besteht darin, dass die Längsbügel an den dem Scharnier gegenüberliegenden Längsseiten der Gehäuseteile anliegen und die Ohrenbügel an den Breitseiten derart anliegen, dass die beiden Brillengläser und die Bügel im aufgeklappten Zustand des Brillenetuis in einer Z-Form vorliegen.

Die Erfindung wird anhand der Figuren 1 bis 11 beispielhaft weiter erläutert. Dabei zeigen:
- Figur 1: eine perspektivische Ansicht einer faltbaren Brille;
- Figur 2: einen Querschnitt durch den Nasensteg mit dem Faltgelenk;
- Figur 3: eine perspektivische Ansicht einer faltbaren Brille im zusammengefalteten Zustand;
- Figur 4a: eine perspektivische Ansicht eines Schnitts durch das Faltgelenk;
- Figur 4b: einen Querschnitt durch eine beispielhafte Ausbildung zweier aufeinander liegender Scharnierflächen des Faltgelenks;
- Figur 5: eine perspektivische Ansicht eines an einem Brillenglas festgelegten Bügels;
- Figur 6: eine perspektivische Ansicht eines Bügelscharniers;
- Figur 7: eine perspektivische Ansicht eines Zwischenscharniers;
- Figur 8: eine perspektivische Ansicht eines Teleskopeinsatzes;
- Figur 9: eine perspektivische Ansicht eines aufgeklappten Brillenetuis mit faltbarer Brille;
- Figur 10: eine perspektivische Ansicht eines halb aufgeklappten Brillenetuis mit faltbarer Brille;
- Figur 11: eine perspektivische Ansicht eines beinahe zusammengeklappten Brillenetuis mit faltbarer Brille;
- Figur 12a: eine Draufsicht auf eine alternative Ausführungsform der faltbaren Brille im vollständig aufgeklappten Zustand;
- Figur 12b: eine Draufsicht auf die in Figur 12a dargestellte, faltbare Brille im zusammengeklappten Zustand.

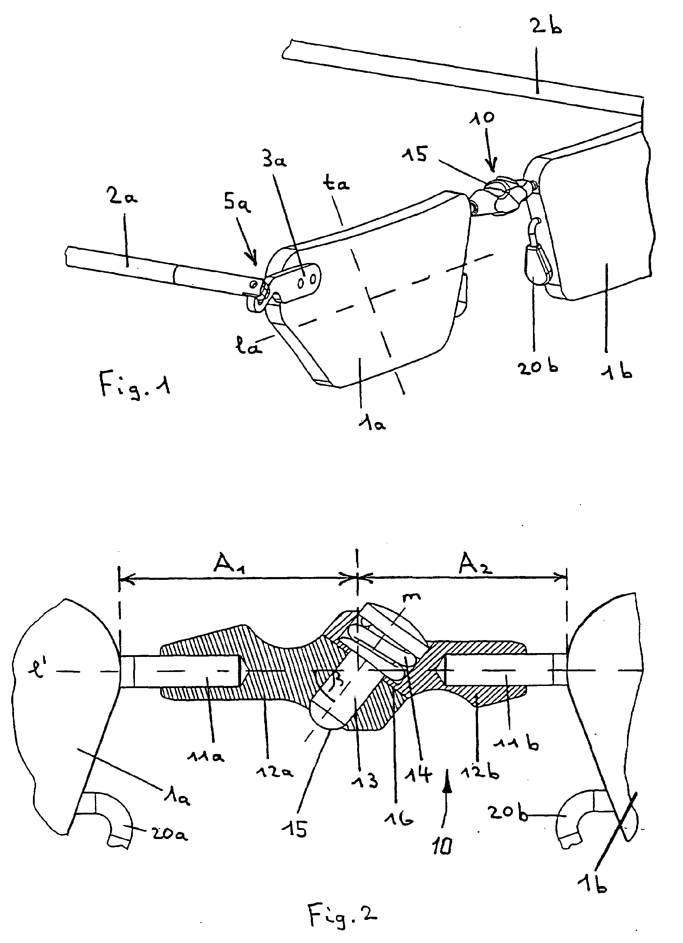

Figur 1 zeigt eine perspektivische Ansicht einer faltbaren Brille mit zwei Brillengläsern, wobei das vom Brillenträger aus gesehen rechte Brillenglas mit 1a und das linke mit 1b bezeichnet wird.

In der weiteren Figurenbeschreibung beziehen sich die mit "a" ergänzten Bezugszeichen immer auf die bezüglich der Faltachse des Faltgelenks vom Brillenträger aus gesehen rechte Seite und die mit "b" ergänzten Bezugszeichen immer auf die bezüglich der Faltachse vom Brillenträger aus gesehen linke Seite. Die beiden Seiten der faltbaren Brille sind vorzugsweise symmetrisch aufgebaut, so dass in den Figuren im Allgemeinen nur die Bezugszeichen für eine Seite eingetragen sind.

Zwischen den Brillengläsern 1a und 1b befindet sich der Nasensteg 10 mit dem mittig angeordneten Faltgelenk 15. Im nasenseitigen Zwischenraum zwischen den Brillengläsern 1a und 1b sind zudem die Padstege 20a und 20b zu sehen. Für das vom Brillenträger aus gesehen rechte Brillenglas 1a sind zudem die Längsachse *la* und die Querachse *ta* eingezeichnet. Figur 1 zeigt auch die an den Brillengläsern 1a und 1b festgelegten Bügel 2a und 2b. Dabei sind die Bügel 2a und 2b über die Bügelscharniere 5a, 5b mit den Bügelhalterungen 3a, 3b verbunden, wobei die Bügelhalterungen 3a, 3b direkt an den Brillengläsern festgelegt sind. Die Festlegung der Bügelhalterungen 3a, 3b an den Brillengläsern 1a, 1b kann mittels Schrauben oder Nieten (nicht eingezeichnet) erfolgen.

Figur 2 zeigt einen Querschnitt durch den Nasensteg 10 mit dem Faltgelenk 15. Der Nasensteg 10 besteht aus zwei in die Brillengläser 1a, 1b eingelassene Stegstifte 11a, 11b und dazwischen liegenden Faltgelenkteilen 12a, 12b. Die Faltgelenkteile 12a, 12b haben je eine Scharnierfläche 16, die aufeinander zu liegen kommen. Die beiden Faltgelenkteile 12a, 12b sind miteinander mittels einer Faltgelenkschraube 13 verbunden. Dabei ist die Bohrung im Faltgelenkteil 12b angesenkt, so dass der Kopf der Faltgelenkschraube teilweise in das angesenkte Bohrloch eingeführt werden kann. Im angesenkten Bohrlochteil befindet sich zudem eine Faltgelenkfeder 14, welche das drehbare Festlegen der beiden Faltgelenkteile 12a, 12b ermöglicht. Die Flächennormale auf die Scharnierfläche 16 bildet die Drehachse *m.* Durch die beiden Stegstifte 11a, 11b und die beiden Faltgelenkteile 12a, 12b verläuft eine konzentrische Längsachse *l'.* Diese bildet mit der Drehachse *m* einen spitzen Winkel β. Figur 2 zeigt die faltbare Brille im aufgefalteten Zustand, das heisst in der Tragposition der Brille. Der Schnittpunkt der Drehachse *m* mit der konzentrischen Längsachse *l'* halbiert den Nasensteg 10, so dass der Nasensteg 10 in zwei Abschnitte A₁ und A₂ unterteilt wird.

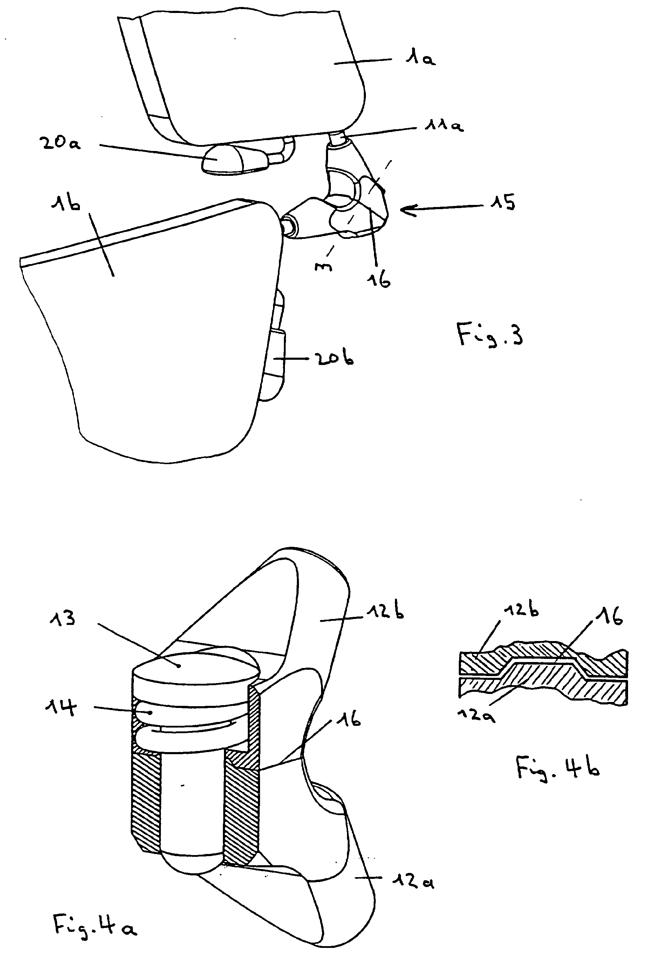

Figur 3 zeigt eine perspektivische Ansicht einer faltbaren Brille im zusammengefalteten Zustand. Dabei wurden die Brillengläser 1a, 1b um 180° um die Drehachse *m* gedreht. Die eigentliche Drehung erfolgt dabei auf der Scharnierfläche 16 des Faltgelenks 15.

Figur 4a zeigt eine perspektivische Ansicht eines Querschnitts durch das Faltgelenk 15. Hierbei ist das Faltgelenk 15 im zusammengefalteten Zustand gezeigt. Die Faltgelenkteile 12a, 12b sind mittels einer Faltgelenkschraube 13 miteinander verbunden. Das Bohrloch für die Aufnahme der Faltgelenkschraube 13 ist auf der Seite des Faltgelenkteiles 12b angesenkt. In diesem angesenkten Bohrloch befindet sich zudem eine Faltgelenkfeder 14, welche einerseits durch die Ansenkung und andererseits durch den Kopf der Faltgelenkschraube 13 festgelegt ist.

Figur 4b zeigt eine spezielle Ausgestaltung der Scharnierfläche 16. Dabei sind die Scharnierflächen 16 der Faltgelenkteile 12a, 12b querschnittlich trapezförmig ausgebildet. Eine solche Ausführung der Scharnierflächen 16 erlaubt die seitliche Fixierung der Faltgelenkteile 12a, 12b, so dass die Faltgelenkschraube 13 nur die Kräfte in axialer Richtung der Schraubverbindung aufnehmen muss.

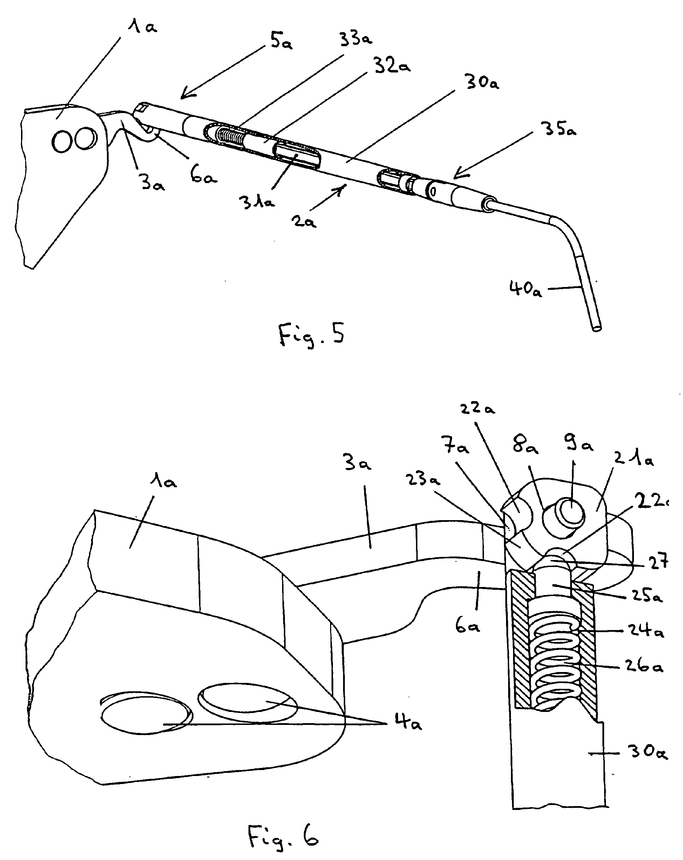

Figur 5 zeigt eine perspektivische Ansicht eines an ein Brillenglas 1a festgelegten Bügels 2a. Dabei ist der Bügel 2a über das Bügelscharnier 5a mit der Bügelhalterung 3a verbunden. Die Bügelhalterung 3a hat an einem Ende eine blattförmige Anformung, welche mittels Schrauben oder Nieten am Brillenglas 1a festgelegt ist. Am anderen Ende der Bügelhalterung 3a ist eine hakenförmige Anformung 6a ausgebildet. Der Bügel 2a ist in zwei Teile, nämlich in den Längsbügel 30a und den Ohrenbügel 40a unterteilt, wobei die beiden Teile über das Zwischengelenk 35a miteinander verbunden sind. Der Längsbügel 30a ist im Wesentlichen rohrförmig ausgebildet und weist einen zylinderförmigen Hohlraum auf. Dieser Hohlraum nimmt einen Teleskopeinsatz 31a auf. Zwischen dem Teleskopeinsatz 31a und dem bügelscharnierseitigen Ende des zylinderförmigen Hohlraumes befindet sich eine Teleskopfeder 33a. Zwischen der Teleskopfeder 33a und dem Teleskopeinsatz 31a ist zudem ein im rohrförmigen Längsbügel 30a frei bewegliches, zylinderförmiges Führungsstück 32a angeordnet.

Figur 6 zeigt eine perspektivische Ansicht eines Bügelscharniers. Das Brillenglas 1a weist zwei Bohrungen 4a zur Befestigung der Bügelhalterung 3a auf. Das freie Ende der Bügelhalterungen 3a ist als hakenförmige Anformung 6a ausgebildet. Das freie Ende der hakenförmigen Anformung 6a ist als Arretierelement 21a ausgebildet und enthält eine Drehbuchse 8a zur Aufnahme eines Drehstiftes 9a. Das bügelscharnierseitige Ende des Längsbügels 30a ist gabelförmig ausgebildet, wobei die gabelförmige Anformung 7a zwei im Abstand angeordnete Lappen aufweist. Im Bild ist jedoch nur die eine Lappe der gabelförmigen Anformung 7a zu sehen. Das Arretierelement 21a liegt zwischen den beiden Lappen der gabelförmigen Anformung 7a. Die beiden Lappen der gabelförmigen Anformung 7a weisen Bohrungen auf, so dass durch diese Bohrungen und die Drehbuchse 8a des Arretierelements 21a ein als Drehstift 9a ausgebildeter Drehzapfen gestossen werden kann. Damit ist der Längsbügel 30a um die Drehachse des Bügelscharniers 5a frei drehbar. Das Arretierelement 21a weist zwei nutenförmige Ausnehmungen 22a auf, welche gegenüber der Drehachse des Bügelscharniers in einem Winkel von 90° angeordnet sind.

Das bügelscharnierseitige Ende des Längsbügels 30a weist eine hinterschnittene Bohrung auf. In dieser hinterschnittenen Bohrung befindet sich ein zylinderschraubenförmiger Stift 25a. Zudem enthält die hinterschnittene Bohrung eine Druckfeder 26a, welche den zylinderschraubenförmigen Stift 25a nach Aussen drückt. Der zylinderschraubenförmige Stift 25a weist eine Stiftspitze 27a auf, welche in die nutenförmige Ausnehmung 22a passt. Das Zusammenwirken der nutenförmigen Ausnehmung 22a und der Stiftspitze 27a erlaubt eine lösbare Arretierung des Längsbügels 30a. Die nutenförmigen Ausnehmungen 22a sind derart am Arretierelement 21a angeordnet, dass einerseits eine arretierbare Position des Längsbügels 30a in der Ebene des Brillenglases 1a und andererseits eine arretierbare Tragposition in einer zur Brillenglas-Ebene senkrechten Ebene möglich ist.

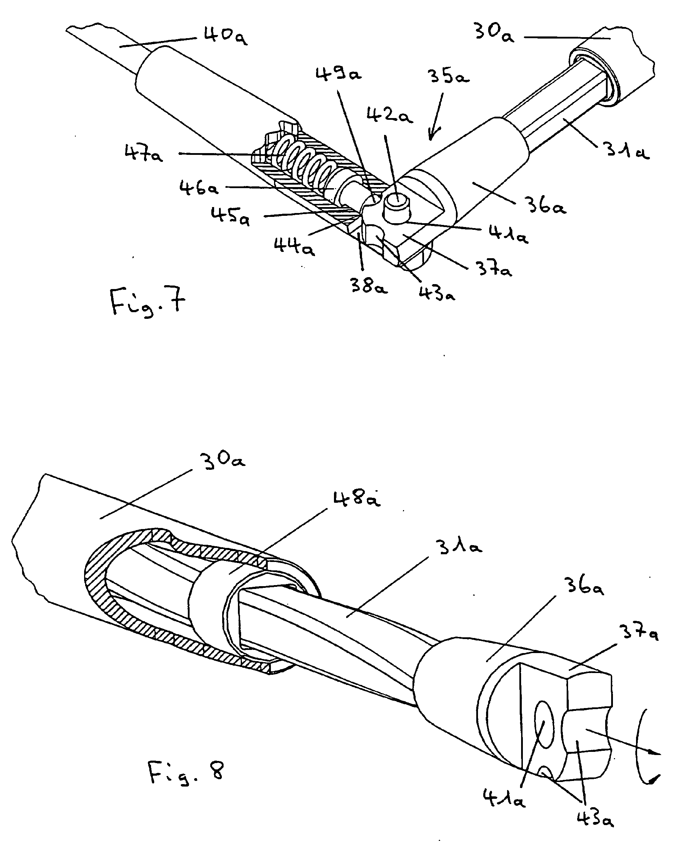

Figur 7 zeigt eine perspektivische Ansicht eines Zwischenscharniers 35a. Das Zwischenscharnier 35a verbindet den Längsbügel 30a mit dem Ohrenbügel 40a. Aus dem Längsbügel 30a ragt ein teilweise herausgestossener Teleskopeinsatz 31a. Der Teleskopeinsatz 31a ist querschnittlich im Wesentlichen quadratisch ausgebildet, wobei die Ecken abgeschrägt sind. Am freien Ende des Teleskopeinsatzes 31a befindet sich eine Gelenkhülse 36a. Die Gelenkhülse 36a weist eine blattförmige Anformung in Form eines Arretierelementes 37a auf. Das Arretierelement 37a ist im Wesentlichen gleich wie das in Figur 6 beschriebene Arretierelement 21a aufgebaut und weist insbesondere eine Laufbuchse 41a auf. Das zwischenscharnierseitige Ende des Ohrenbügels 40a ist als gabelförmige Anformung 38a mit zwei im Abstand angeordneten Lappen ausgebildet, wobei in Figur7 nur ein Lappen zu sehen ist. Das Arretierelement 37a kommt zwischen die beiden Lappen der gabelförmigen Anformung 38a zu liegen. Die beiden Lappen der gabelförmigen Anformung 38a weisen je eine Bohrung auf, so dass zwischen diese Bohrungen und die Laufbuchse 41a des Arretierelementes 37a ein als Drehstift 42a ausgebildeter Drehzapfen gesteckt werden kann. Damit ist der Ohrenbügel 40a gegenüber dem Längsbügel 30a um die Achse durch die Drehbuchse 41a frei drehbar. Die gabelförmige Anformung 38a des Ohrenbügels 40a weist an ihrem freien Ende eine hinterschnittene Bohrung auf, die einen zylinderförmigen Stift 46a aufnimmt. In der hinterschnittenen Bohrung befindet sich auch eine Druckfeder 47a, welche den zylinderschraubenförmigen Stift 46a nach Aussen drückt. Die Stiftspitze 49a des zylinderschraubenförmigen Stiftes 46a befindet sich in einer nutenförmigen Ausnehmung 43a. Das Arretierelement 37a weist an seiner parallel zur Drehachse des Zwischenscharniers 35a parallelen Fläche, der sogenannten Umlauffläche 44a, zwei nutenförmige Ausnehmungen 43a auf. Die nutenförmigen Ausnehmungen 43a sind derart angeordnet, dass einerseits eine gestreckte Bügelposition möglich ist, bei der die konzentrische Längsachse des Ohrenbügels 40a und die konzentrische Längsachse des Längsbügels 30a zusammenfallen, und andererseits auch eine arretierbare Position möglich ist, welche zur gestreckten Position um einen Winkel von etwa 90° gedreht ist.

Figur 8 zeigt eine perspektivische Ansicht eines speziell ausgebildeten Teleskopeinsatzes 31a. Der Längsbügel 30a ist rohrförmig ausgebildet und enthält an seinem freien Ende ein Drehelement 48a. Das Drehelement 48a ist hohlzylinderförmig ausgebildet, wobei sein zylinderförmiger Hohlraum einen im Wesentlichen quadratischen Querschnitt aufweist. Der Teleskopeinsatz 31a weist ebenfalls einen annähernd quadratischen Querschnitt mit abgeschrägten Kanten auf. Am freien Ende des Teleskopeinsatzes 31a ist eine Gelenkhülse 36a festgelegt. Die Gelenkhülse 36a weist eine blattförmige Anformung in Form eines Arretierelementes 37a auf. Das Arretierelement 37a zeigt eine Laufbuchse 41a und zwei nutenförmige Ausnehmungen 43a. Die spezielle Ausgestaltung des Teleskopeinsatzes 31a betrifft das gedrehte Längsprofil. Durch das Zusammenwirken des gedrehten Längsprofils mit dem Drehelement 48a wird während dem durch die Teleskopfeder bewirkten Herausstossen des Teleskopeinsatzes 31a aus der kompakten, zusammengestossenen Position in die Tragposition eine Drehung des Arretierelementes 37a und damit auch des Ohrenbügels 40a um einen vorbestimmten Winkel, beispielsweise um 90°, um die konzentrische Längsachse des Längsbügels 30a bewirkt.

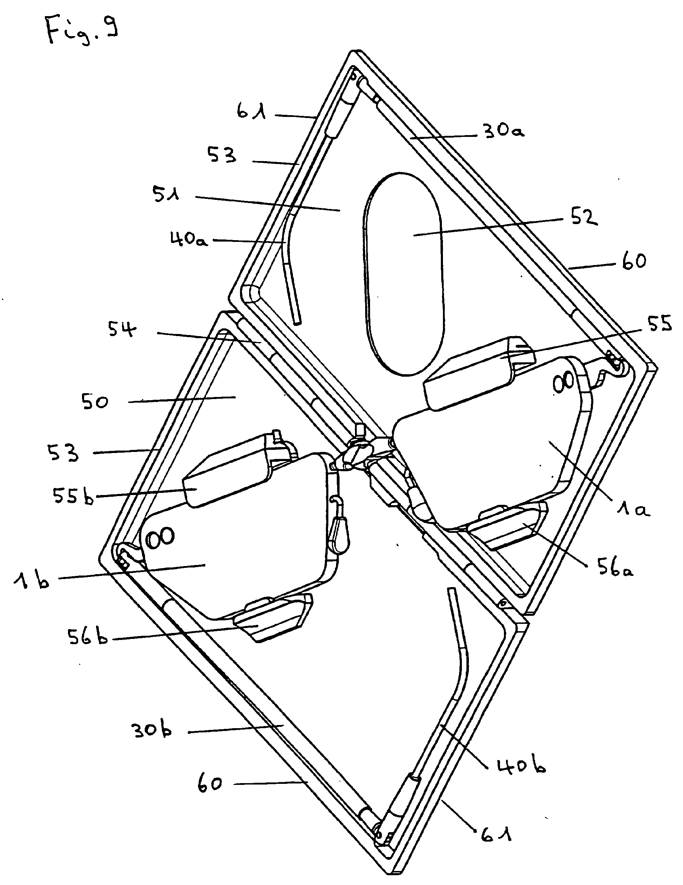

In den Figuren 9 bis 11 sind die einzelnen Sequenzen beim Schliessen eines Brillenetuis bzw. beim Falten der Brille dargestellt. Im aufgeklappten Zustand des Brillenetuis befindet sich dessen Boden 50 und dessen Deckel 51 in derselben Ebene. Der Boden 50 und der Deckel 51 sind rechteckig ausgebildet und weisen je zwei Längsseiten 60 und zwei Breitseiten 61 auf. Der Boden 50 und der Deckel 51 sind auf einer Längsseite 60 durch ein Scharnier 54 miteinander verbunden. Der Boden 50 und Deckel 51 weisen je eine umlaufende Auskragung 53 auf. Diese Auskragung 53 ist querschnittlich quadratisch oder trapezförmig ausgebildet. Der Boden 50 weist Befestigungsmittel 55b und 56b zur Festlegung des Brillenglases 1b auf. Der Deckel 51 weist ebenfalls Befestigungsmittel 55a und 56a zur Festlegung des anderen Brillenglases 1a auf. Die scharnierseitigen Auskragungen des Bodens 50 und des Deckels 61 weisen eine Ausnehmung 62 zur Aufnahme des Faltgelenks der faltbaren Brille auf. Die gegen das Innere des Brillenetuis gerichteten Seiten der umlaufenden Auskragung 53 weisen einen Hohlrand 57, 58 auf.

Figur 9 zeigt zudem die in die Ebene der Brillengläser 1b, 1a gedrehten Längs- und Ohrenbügel 30b, 40b, 30a, 40a. Die Längsbügel 30a und 30b der Brille liegen an den Längsseiten 60 des Bodens 50 und des Deckels 51 an. Die Ohrenbügel 40a und 40b liegen an den Breitseiten 61 des Bodens 50 und des Deckels 51 an. Das in Figur 9 dargestellte Brillenetui zeigt auf dem Deckel 51 eine Lupe 52. Damit kann dieses Brillenetui im geöffneten oder im geschlossenen Zustand auch als Lupe benützt werden.

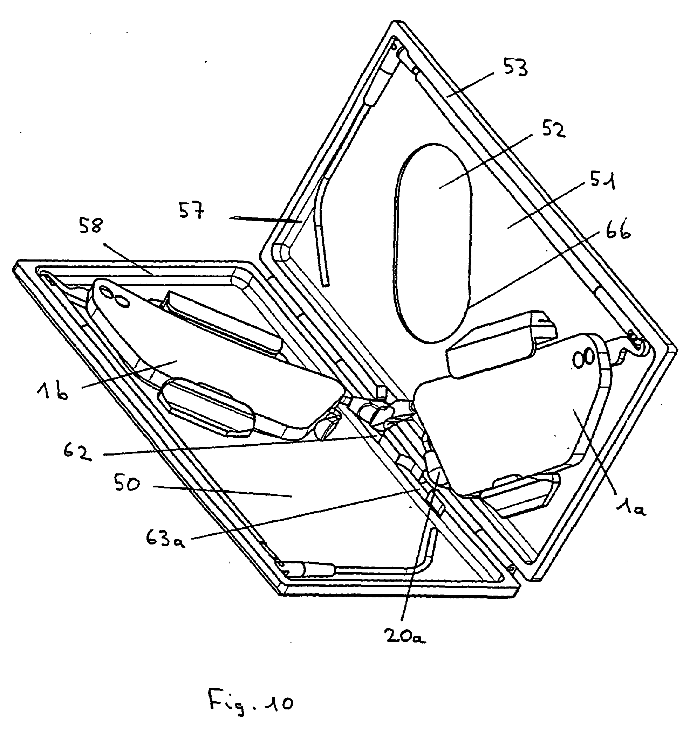

Die umlaufende Auskragung 53 zeigt auf der scharnierseitigen Längsseite die Ausnehmung 62 für das Faltgelenk. Zudem zeigt die umlaufende Auskragung scharnierseitig eine weitere Ausnehmung 63a zur teilweisen Aufnahme des Padstegs 20a des am Deckel 51 befestigten Brillenglases 1a. Der Deckel 51 weist eine Ausnehmung 66 auf, in die eine Lupe 52 eingesetzt ist. Der in Figur 10 dargestellte Boden 50 zeigt eine umlaufende Auskragung 53, welche einen gegen den Innenraum des Brillenetuis gerichteten Hohlrand 58 aufweist. Der Deckel 51 weist ebenfalls eine umlaufende Auskragung 53 auf, dessen gegen den Innenrand des Brillenetuis gerichtete Seite als Hohlrand 57 ausgebildet ist.

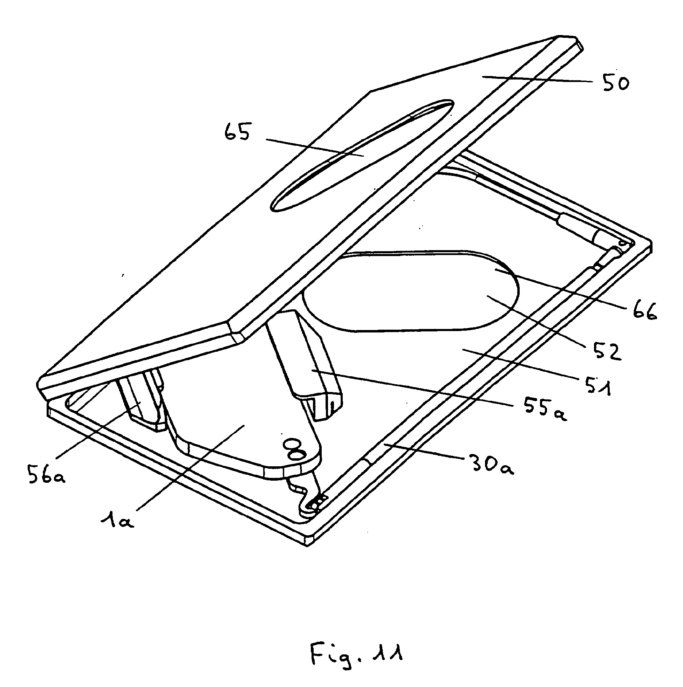

Gemäss Figur 11 ist auf dem gegenüberliegenden Boden 50 eine spiegelbildlich zur Öffnung 66 angeordnete Ausnehmung bzw. Fensteröffnung 65 angeordnet. Die Öffnung 65 befindet sich genau über dem Brillenglas 1b, so dass bei eingelegter Faltbrille eine Verstärkung der Lupewirkung erreicht werden kann. Insgesamt hat das Brillenetui eine kofferförmige Form, wobei die Dicke des darin eingeschlossenen Hohlraums ungefähr der Dicke eines Brillenglases 1a, 1b entspricht. Hierbei ist jedoch zu beachten, dass die an die oberen und unteren Brillenhalterungen 55a, 55b, 56a, 56b angeformten Flansche eine gewisse Dicke aufweisen, so dass der kofferförmige Hohlraum insgesamt etwas dicker ist als die Brillenglasdicke. Die faltbare Brille wird zweckmässigerweise immer in eine Diagonale des aufgeklappten Brillenetuis gelegt. Hierbei ist darauf zu achten, dass das Faltgelenk 15 stets genau in die dafür vorgesehene, scharnierseitige Ausnehmung 62 der umlaufenden Auskragung 53 fällt.

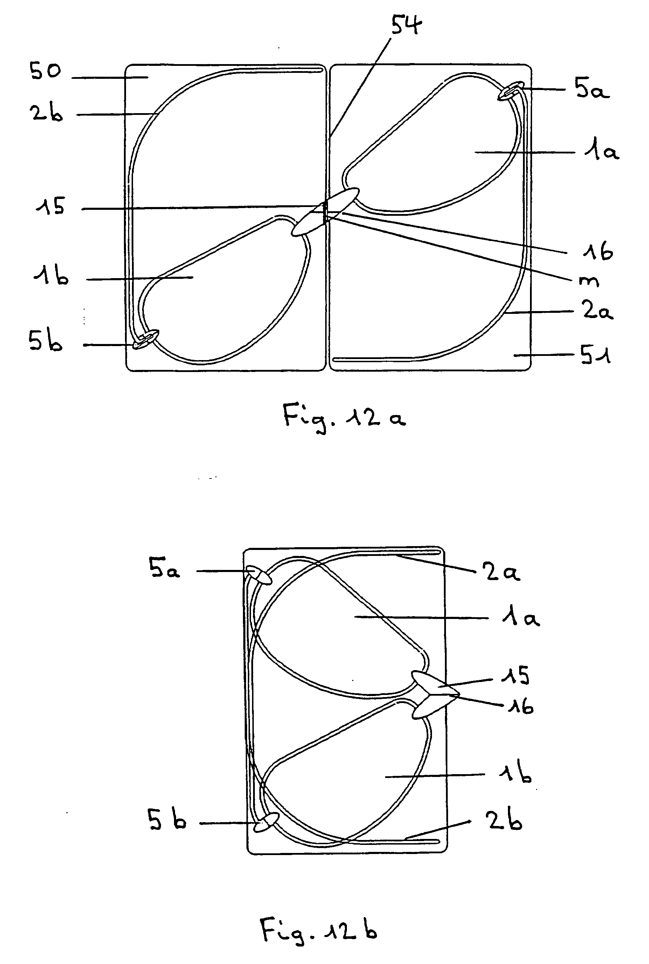

Figur 12a zeigt die Draufsicht auf eine alternative Ausführungsform der faltbaren Brille im vollständig aufgeklappten Zustand. Die faltbare Brille ist in ein Brillenetui mit Scharnier 54 eingelegt, wobei Brillenglas 1a am Deckel 51 und Brillenglas 1b am Boden 50 festgelegt ist. Die entsprechenden Befestigungsmittel sind in Figur 12, einer übersichtlicheren Darstellung wegen, nicht eingezeichnet. Das Faltgelenk 15 bildet den Nasensteg, d.h. die nasenseitige Verbindung der beiden Brillengläser 1a, 1b. Die beiden aufeinanderliegenden Scharnierflächen 16 liegen in einer zum Etui-Scharnier 54 senkrechten Ebene und die Drehachse *m* des Faltgelenks 15 fällt mit der Achse des Scharniers 54 zusammen. Die Bügel 2a, 2b der in Figur 12a dargestellten faltbaren Brille sind mittels Bügelscharnieren 5a, 5b ann den Brillengläsern 1a, 1b festgelegt. Die Bügel 2a, 2b selbst sind einstückig ausgebildet.

Figur 12b zeigt eine Draufsicht auf die in Figur 12a dargestellte, alternative Ausführungsform, wobei die faltbare Brille hier im vollständig zusammengefalteten Zustand dargestellt ist. Die faltbare Brille ist wiederum in ein Brillenetui eingelegt, wobei nur dessen Umrisse zu sehen sind. Das in Figur 12b dargestellte Brillenetui kann beispielsweise ein Gehäuse aus durchsichtigem Material darstellen. Figur 12b zeigt die Position der faltbaren Brille nachdem das auf der rechten Seite des Brillenträgers befindliche Brillenglas 1a um 180° gedreht wurde, wobei das linke Brillenglas 1b auf der Unterlage liegen blieb. In Figur 12b ist insbesondere auch die Ausbildung des Faltgelenks 15 im gefaltetn Zustand zu sehen.

## Patentansprüche

1. Faltbare Brille mit zwei Brillengläsern (1a, 1b), die zwischen einer Tragposition und einer Faltposition verstellbar und durch einen Nasensteg (10) miteinander verbunden sind, wobei der Nasensteg (10) auf einer etwa in der Ebene der Brillengläser (1a, 1b) verlaufenden Verbindungsachse (*1*') liegt und ein Faltgelenk (15) zum Falten der Brille aufweist, **dadurch gekennzeichnet, dass** das Faltgelenk (15) derart um eine in einem spitzen Winkel (β) zur Verbindungsachse (*l*') verlaufenden Drehachse (*m*) drehbar ist, dass die Brillengläser (1a, 1b) nach einer Drehung um 180° nebeneinander in dieselbe Ebene in die Faltposition zu liegen kommen.

2. Faltbare Brille nach Anspruch 1, **dadurch gekennzeichnet, dass** das Faltgelenk (15) zwei Faltgelenkteile (12a, 12b) aufweist, die je eine Scharnierfläche (16) aufweisen, deren Flächennormalen mit der Drehachse (*m*) zusammenfallen, wobei die Scharnierflächen (16) aneinander liegen und mittels einem Befestigungsmittel (13) lösbar verbunden sind.

3. Faltbare Brille nach Anspruch 2, **dadurch gekennzeichnet, dass** die Verbindung zwischen den Faltgelenkteilen mit einem Federelement (14) in Richtung der Drehachse vorgespannt ist.

4. Faltbare Brille nach einem der Ansprüche 1 bis 3, **dadurch gekennzeichnet, dass** der spitze Winkel (β) zwischen der Verbindungsachse (*l*') und der Drehachse *m* zwischen 30° und 60°, insbesondere zwischen 40° und 50°, beträgt.

5. Faltbare Brille nach einem der Ansprüche 1 bis 4; **dadurch gekennzeichnet, dass** wenigstens an einem Brillenglas (1a, 1b) ein Bügel (2a, 2b) mittels einem Bügelscharnier (5a, 5b) an einer am Brillenglas (1a, 1b) festgelegten Bügelhalterung (3a, 3b) derart befestigt ist, dass der Bügel (2a, 2b) aus einer im Wesentlichen senkrecht zur Ebene der Brillengläser (1a, 1b) liegenden Tragposition in die Ebene des anliegenden Brillenglases drehbar ist.

6. Faltbare Brille nach Anspruch 5, **dadurch gekennzeichnet, dass** die Bügelhalterung (3a, 3b) an einem Ende eine Drehbuchse (8a, 8b)aufweist, und das gegen das Bügelscharnier gerichtete Ende des Bügels (2a, 2b)eine gabelförmige Anformung (7a, 7b) mit zwei im Abstand angeordneten Lappen aufweist, welche Bohrungen zur Aufnahme eines Drehzapfens (9a, 9b) aufweisen, wobei die Drehbuchse (8a, 8b) zwischen den beiden Lappen der gabelförmigen Anformung (7a, 7b) liegt.

7. Faltbare Brille nach Anspruch 6, **dadurch gekennzeichnet, dass** die Drehbuchse (8a, 8b) als scheibenförmiges Arretierelement (21a, 21b) mit einer Umlauffläche (23a, 23b)ausgebildet ist, und die Umlauffläche (23a, 23b) wenigstens zwei muldenförmige Vertiefungen (22a, 22b) zur Aufnahme eines federnden Rastelements (27a, 27b) am Ende des Bügels (2a, 2b) aufweist, wobei die muldenförmigen Vertiefungen (22a, 22b) bezüglich der durch die Drehbuchse (8a, 8b) verlaufenden Drehachse in einem Winkel von etwa 90° angeordnet sind, und der lösbaren Arretierung des Bügels (2a, 2b) in der Tragposition bzw. in der Faltposition dienen.

8. Faltbare Brille nach einem der Ansprüche 5 bis 7, **dadurch gekennzeichnet, dass** der Bügel (2a, 2b) in einen am Bügelscharnier (5a, 5b) anliegenden Längsbügel (30a, 30b) und einen Ohrenbügel (40a, 40b) unterteilt ist, wobei zwischen dem Längsbügel (30a, 30b) und dem Ohrenbügel (40a, 40b) ein Zwischenscharnier (35a, 35b) angeordnet ist, und der Ohrenbügel zwischen einer gestreckten koaxial zum Längsbügel verlaufenden Lage und einer etwa im rechten Winkel zum Längsbügel abgewinkelten Lage schwenkbar ist.

9. Faltbare Brille nach Anspruch 8, **dadurch gekennzeichnet, dass** das Zwischenscharnier (35a, 35b) eine Rastvorrichtung für die lösbare Arretierung des Ohrenbügels in der gestreckten bzw. in der abgewinkelten Lage aufweist.

10. Faltbare Brille nach einem der Ansprüche 5 bis 9, **dadurch gekennzeichnet, dass** der Bügel (2a, 2b) als Teleskop ausgebildet ist.

11. Faltbare Brille nach einem der Ansprüche 8 bis 10, **dadurch gekennzeichnet, dass** der Längsbügel (30a, 30b) als Teleskop ausgebildet ist, wobei der Längsbügel (30a, 30b) einen Hohlraum aufweist, der zumindest an einem gegen den Ohrenbügel (40a, 40b) gerichteten Endbereich ein Teleskop-Führungselement (48a, 48b) enthält, dessen Innenquerschnitt polygonal ausgebildet ist und einen querschnittlich entsprechend polygonalen Teleskopeinsatz (31a, 31b) aufnimmt, wobei der Teleskopeinsatz (31a, 31b) bevorzugt mittels einer in den zylinderförmigen Hohlraum des Längsbügels (30a, 30b) eingelassenen Teleskopfeder (33a, 33b) derart verbunden ist, dass er aus dem Hohlraum herausgestossen wird.

12. Faltbare Brille nach Anspruch 11, **dadurch gekennzeichnet, dass** der Teleskopeinsatz (31a, 31b) bezüglich seiner Längsachse im Querschnitt derart verwunden ist, dass der vollständig in den Hohlraum des Längsbügels (30a, 30b) eingeführte Teleskopeinsatz (31a, 31b) um seine Längsachse drehbar ist.

13. Brillenetui zur Aufbewahrung einer faltbaren Brille mit zwei Brillengläsern, die um ein Faltgelenk faltbar sind, gemäss einem der Ansprüche 1 bis 12, wobei das Brillenetui zwei durch ein Scharnier (54) verbundene Gehäuseteile (50, 51) umfasst, **dadurch gekennzeichnet, dass** jedes behänseteil (50, 51) Befestigungsmittel (55a, 55b, 56a, 56b) für das lösbare Festlegen der Brille aufweist und dass die Befestigungsmittel (55a, 55b, 55a, 56b) derart angeordnet sind, dass bei in das Etui eingelegter Brille die Scharnierachse und die Drehachse (*m*) des Faltgelenks (15) zusammenfallen, so dass die Brille durch Öffnen oder Zusammenklappen des Brillenetuis aufgefaltet oder zusammengefaltet wird.

14. Brillenetui nach Anspruch 13, **dadurch gekennzeichnet, dass** die Gehäuseteile (50, 51) des Brillenetuis je eine umlaufende Auskragung (53) aufweisen, welche zumindest in Teilbereichen einen gegen den Hohlraum des Brillenetuis offenen Hohlrand (57, 58) für eine teilweise Aufnahme der Bügel (2a, 2b) aufweisen.

15. Brillenetui nach Anspruch 13 oder 14, **dadurch gekennzeichnet, dass** ein Gehäuseteil (50, 51) eine Öffnung (65, 66) aufweist, in die eine Lupe (52) eingesetzt ist.

16. Brillenetui nach Anspruch 15, **dadurch gekennzeichnet, dass** der beim zusammengeklappten Brillenetui der Lupen-Öffnung (65, 66) gegenüberliegende Gehäuseteil (50, 51) eine entsprechend spiegelbildlich angeordnete Fensteröffnung (65, 66) aufweist.

17. Anordnung einer faltbaren Brille gemäss einem der Ansprüche 1 bis 12 in einem Brillenetui gemäss einem der Ansprüche 13 bis 16, **dadurch gekennzeichnet, dass** die Brillengläser (1a, 1b) diagonal im vollständig geöffneten Brillenetui angeordnet sind.

18. Anordnung gemäss Anspruch 17, wobei die Brille zwei Bügel (2a, 2b) bestehend aus Längsbügel und Ohrenbügel aufweist, **dadurch gekennzeichnet, dass** die Längsbügel (30a, 30b) an den dem Scharnier (54) gegenüberliegenden Längsseiten (60) der Gehäuseteile (50, 51) anliegen und die Ohrenbügel (40a, 40b) an den Breitseiten (61) derart anliegen, dass die beiden Brillengläser (1a, 1b) und die Bügel (30a, 30b, 40a, 40b) im vollständig aufgeklappten Zustand des Brillenetuis in einer Z-Form angeordnet sind.

## Claims

1. Foldable spectacles with two spectacle lenses (1a, 1b) which can be adjusted between a wearing position and a folded position and which are connected to one another by a nosepiece (10), which nosepiece (10) lies on a connecting axis (*1*') extending approximately in the plane of the spectacle lenses (1a, 1b) and comprises a folding joint (15) for folding the spectacles, **characterized in that** the folding joint (15) can be rotated about a rotation axis (*m*), extending at an acute angle (β) to the connecting axis (*1*'), such that the spectacle lenses (1a, 1b), after being rotated through 180°, come to lie in the same plane next to one another in the folded position.

2. Foldable spectacles according to Claim 1, **characterized in that** the folding joint (15) comprises two folding-joint parts (12a, 12b) which each have a hinge surface (16) whose surface normals coincide with the rotation axis (*m*), the hinge surfaces (16) lying on one another and being connected releasably by a securing means (13).

3. Foldable spectacles according to Claim 2, **characterized in that** the connection between the folding-joint parts is pretensioned with a spring element (14) in the direction of the rotation axis.

4. Foldable spectacles according to one of Claims 1 to 3, **characterized in that** the acute angle (β) between the connecting axis (*1*') and the rotation axis (*m*) is between 30° and 60°, in particular between 40° and 50°.

5. Foldable spectacles according to one of Claims 1 to 4, **characterized in that**, at least on one spectacle lens (1a, 1b), a sidepiece (2a, 2b) is secured by means of a sidepiece hinge (5a, 5b) on a sidepiece mount (3a, 3b) fixed on the spectacle lens (1a, 1b), in such a way that the sidepiece (2a, 2b) can be rotated from a wearing position, in which it lies substantially perpendicular to the plane of the spectacle lenses (1a, 1b), into the plane of the adjoining spectacle lens.

6. Foldable spectacles according to Claim 5, **characterized in that** the sidepiece mount (3a, 3b) has a rotary bushing (8a, 8b) at one end, and that end of the sidepiece (2a, 2b) oriented toward the sidepiece hinge has a fork-shaped projection (7a, 7b) with two tabs which are spaced apart and which have bores for receiving a rotary pin (9a, 9b), the rotary bushing (8a, 8b) lying between the two tabs of the fork-shaped projection (7a, 7b).

7. Foldable spectacles according to Claim 6, **characterized in that** the rotary bushing (8a, 8b) is designed as a disk-shaped locking element (21a, 21b) with a peripheral surface (23a, 23b), and the peripheral surface (23a, 23b) has at least two trough-like depressions (22a, 22b) for receiving a resilient catch element (27a, 27b) at the end of the sidepiece (2a, 2b), the trough-like depressions (22a, 22b) being arranged at an angle of approximately 90° relative to the rotation axis extending through the rotary bushing (8a, 8b) and being used to releasably lock the sidepiece (2a, 2b) in the wearing position or in the folded position.

8. Foldable spectacles according to one of Claims 5 to 7, **characterized in that** the sidepiece (2a, 2b) is divided into a temple sidepiece (30a, 30b), bearing on the sidepiece hinge (5a, 5b), and an ear sidepiece (40a, 40b), an intermediate hinge (35a, 35b) being arranged between the temple sidepiece (30a, 30b) and the ear sidepiece (40a, 40b), and the ear sidepiece being able to be pivoted between a deployed position, extending coaxially with respect to the temple sidepiece, and an angled position in which it is bent approximately at a right angle with respect to the temple sidepiece.

9. Foldable spectacles according to Claim 8, **characterized in that** the intermediate hinge (35a, 35b) has a catch device for releasably locking the ear sidepiece in the deployed position or angled position.

10. Foldable spectacles according to one of Claims 5 to 9, **characterized in that** the sidepiece (2a, 2b) is designed as a telescope.

11. Foldable spectacles according to one of Claims 8 to 10, **characterized in that** the temple sidepiece (30a, 30b) is designed as a telescope, said temple sidepiece (30a, 30b) having a hollow space which, at least in an end area directed toward the ear sidepiece (40a, 40b), contains a telescope guide element (48a, 48b) whose inner cross section has a polygonal configuration and receives a telescope insert (31a, 31b) of corresponding polygonal cross section, the telescope insert (31a, 31b) preferably being connected by means of a telescopic spring (33a, 33b) fitted in the cylindrical hollow space of the temple sidepiece (30a, 30b), in such a way that said telescope insert (31a, 31b) is ejected from the hollow space.

12. Foldable spectacles according to Claim 11, **characterized in that** the telescope insert (31a, 31b), along its longitudinal axis, is twisted in cross section in such a way that the telescope insert (31a, 31b) inserted fully into the hollow space of the temple sidepiece (30a, 30b) is rotatable about its longitudinal axis.

13. Spectacle case for storage of foldable spectacles with two spectacle lenses which can be folded about a folding joint, according to one of Claims 1 to 12, the spectacle case comprising two housing parts (50, 51) connected by a hinge (54), **characterized in that** each housing part (50, 51) has securing means (55a, 55b, 56a, 56b) for releasable attachment of the spectacles, and **in that** the securing means (55a, 55b, 56a, 56b) are arranged in such a way that, when the spectacles are placed in the case, the hinge axis and the rotation axis (m) of the folding joint (15) coincide so that the spectacles are opened or shut by opening or shutting the spectacle case.

14. Spectacle case according to Claim 13, **characterized in that** the housing parts (50, 51) of the spectacle case each have a peripheral collar (53), each of these having, at least in some areas, a hollow edge (57, 58) which is open toward the hollow space of the spectacle case and partially receives the sidepieces (2a, 2b).

15. Spectacle case according to Claim 13 or 14, **characterized in that** a housing part (50, 51) has an opening (65, 66) into which a magnifying glass (52) is fitted.

16. Spectacle case according to Claim 15, **characterized in that**, when the spectacle case is folded shut, the housing part (50, 51) lying opposite the opening (65, 66) for the magnifying glass has a corresponding window opening (65, 66) arranged in mirror symmetry.

17. Arrangement of foldable spectacles according to one of Claims 1 to 12 in a spectacle case according to one of Claims 13 to 16, **characterized in that** the spectacle lenses (1a, 1b) are arranged diagonally in the fully opened spectacle case.

18. Arrangement according to Claim 17, the spectacles comprising two sidepieces (2a, 2b) which consist of temple sidepiece and ear sidepiece, **characterized in that** the temple sidepieces (30a, 30b) bear on the long sides (60) of the housing parts (50, 51) opposite the hinge (54), and the ear sidepieces (40a, 40b) bear on the shorter sides (61) in such a way that the two spectacle lenses (1a, 1b) and the sidepieces (30a, 30b, 40a, 40b) are arranged in a Z shape when the spectacle case is in the fully opened state.

## Revendications

1. Lunettes pliables, comprenant deux verres de lunettes (1a, 1b) qui peuvent être déplacés entre une position de port et une position pliée et qui sont reliés l'un à l'autre par un pont (10), le pont (10) se situant sur un axe de liaison (1') s'étendant approximativement dans le plan des verres de lunettes (1a, 1b) et présentant une articulation pliante (15) pour replier les lunettes, **caractérisées en ce que** l'articulation pliante (15) peut tourner autour d'un axe de rotation (m) s'étendant suivant un angle aigu (β) par rapport à l'axe de liaison (1'), de telle sorte que les verres de lunettes (1a, 1b), après une rotation de 180°, viennent se placer l'un à côté de l'autre dans le même plan dans la position repliée.

2. Lunettes pliables selon la revendication 1, **caractérisées en ce que** l'articulation pliante (15) présente deux parties d'articulation pliante (12a, 12b), qui présentent chacune une surface de charnière (16) dont les normales à la surface coïncident avec l'axe de rotation (m), les surfaces de charnière (16) étant situées l'une contre l'autre et étant reliées l'une à l'autre de manière amovible par l'intermédiaire d'un moyen de fixation (13).

3. Lunettes pliables selon la revendication 2, **caractérisées en ce que** la liaison entre les parties d'articulation pliante est précontrainte avec un élément de ressort (14) dans la direction de l'axe de rotation.

4. Lunettes pliables selon l'une quelconque des revendications 1 à 3, **caractérisées en ce que** l'angle aigu (β) entre l'axe de liaison (1') et l'axe de rotation (m) est compris entre 30° et 60°, notamment entre 40° et 50°.

5. Lunettes pliables selon l'une quelconque des revendications 1 à 4, **caractérisées en ce qu'**au moins sur un verre de lunettes (1a, 1b), une branche (2a, 2b) est fixée au moyen d'une charnière de branche (5a, 5b) sur une fixation de branche (3a, 3b) fixée au verre de lunettes (1a, 1b), de telle sorte que la branche (2a, 2b) puisse être tournée depuis une position de port située essentiellement perpendiculairement au plan des verres de lunettes (1a, 1b) dans le plan du verre de lunette adjacent.

6. Lunettes pliables selon la revendication 5, **caractérisées en ce que** la fixation de branche (3a, 3b) présente à une extrémité une douille rotative (8a, 8b), et l'extrémité de la branche (2a, 2b) orientée vers la charnière de branche présente une partie façonnée (7a, 7b) en forme de fourche avec deux languettes espacées, qui présentent des alésages pour recevoir un tourillon (9a, 9b), la douille rotative (8a, 8b) se trouvant entre les deux languettes de la partie façonnée (7a, 7b) en forme de fourche.

7. Lunettes pliables selon la revendication 6, **caractérisées en ce que** la douille rotative (8a, 8b) est réalisée sous forme d'élément de butée en forme de disque (21a, 21b) avec une surface périphérique (23a, 23b), et la surface périphérique (23a, 23b) présente au moins deux renfoncements (22a, 22b) en forme de creux pour recevoir un élément d'encliquetage élastique (27a, 27b) à l'extrémité de la branche (2a, 2b), les renfoncements en forme de creux (22a, 22b) étant disposés suivant un angle d'environ 90° par rapport à l'axe de rotation s'étendant à travers la douille rotative (8a, 8b), et servant au blocage desserrable de la branche (2a, 2b) dans la position de port ou dans la position repliée.

8. Lunettes pliables selon l'une quelconque des revendications 5 à 7, **caractérisées en ce que** la branche (2a, 2b) est divisée en une branche longitudinale (30a, 30b) adjacente à la charnière de branche (5a, 5b) et une branche d'oreille (40a, 40b), une charnière intermédiaire (35a, 35b) étant disposée entre la branche longitudinale (30a, 30b) et la branche d'oreille (40a, 40b), et la branche d'oreille pouvant pivoter entre une position étirée s'étendant coaxialement à la branche longitudinale et une position coudée approximativement à angle droit par rapport à la branche longitudinale.

9. Lunettes pliables selon la revendication 8, **caractérisées en ce que** la charnière intermédiaire (35a, 35b) présente un dispositif d'encliquetage pour le blocage desserrable de la branche d'oreille dans la position étirée ou dans la position coudée.

10. Lunettes pliables selon l'une quelconque des revendications 5 à 9, **caractérisées en ce que** la branche (2a, 2b) est réalisée sous forme télescopique.

11. Lunettes pliables selon l'une quelconque des revendications 8 à 10, **caractérisées en ce que** la branche longitudinale (30a, 30b) est réalisée sous forme télescopique, la branche longitudinale (30a, 30b) présentant une cavité qui contient, au moins dans une région d'extrémité orientée vers la branche d'oreille (40a, 40b), un élément de guidage télescopique (48a, 48b), dont la section transversale intérieure est réalisée sous forme polygonale et reçoit un insert télescopique (31a, 31b) de section transversale polygonale correspondante, l'insert télescopique (31a, 31b) étant de préférence relié au moyen d'un ressort télescopique (33a, 33b) incorporé dans la cavité de la branche longitudinale (30a, 30b) de forme cylindrique, de telle sorte qu'il soit expulsé de la cavité.

12. Lunettes pliables selon la revendication 11, **caractérisées en ce que** l'insert télescopique (31a, 31b) est tordu en section transversale par rapport à son axe longitudinal de telle sorte que l'insert télescopique (31a, 31b) introduit complètement dans la cavité de la branche longitudinale (30a, 30b) puisse tourner autour de son axe longitudinal.

13. Etui à lunettes pour le stockage de lunettes pliables comprenant deux verres de lunettes, qui peuvent être repliées autour d'une articulation pliante selon l'une quelconque des revendications 1 à 12, l'étui à lunettes comprenant deux parties de boîtier (50, 51) connectées par une charnière (54), **caractérisé en ce que** chaque partie de boîtier (50, 51) présente des moyens de fixation (55a, 55b, 56a, 56b) pour la fixation amovible des lunettes et **en ce que** les moyens de fixation (55a, 55b, 56a, 56b) sont disposés de telle sorte que lorsque les lunettes sont introduites dans l'étui, l'axe de charnière et l'axe de rotation (m) de l'articulation pliante (15) coïncident, de telle sorte que les lunettes soient dépliées ou repliées par l'ouverture ou la fermeture de l'étui à lunettes.

14. Etui à lunettes selon la revendication 13, **caractérisé en ce que** les parties de boîtier (50, 51) de l'étui à lunettes présentent à chaque fois un rebord périphérique (53), qui, au moins dans des régions partielles, présente un bord creux (57, 58) ouvert vers la cavité de l'étui à lunettes pour recevoir en partie la branche (2a, 2b).

15. Etui à lunettes selon la revendication 13 ou 14, **caractérisé en ce qu'**une partie de boîtier (50, 51) présente une ouverture (65, 66) dans laquelle est insérée une loupe (52).

16. Etui à lunettes selon la revendication 15, **caractérisé en ce que** la partie de boîtier (50, 51) opposée à l'ouverture de loupe (65, 66) lorsque l'étui à lunettes est refermé, présente une ouverture de fenêtre (65, 66) disposée de manière correspondante dans une symétrie spéculaire.

17. Agencement de lunettes pliables selon l'une quelconque des revendications 1 à 12 dans un étui à lunettes selon l'une quelconque des revendications 13 à 16, **caractérisé en ce que** les verres de lunettes (1a, 1b) sont disposés en diagonale dans l'étui à lunettes complètement ouvert.

18. Agencement selon la revendication 17, dans lequel les lunettes présentent deux branches (2a, 2b) se composant d'une branche longitudinale et d'une branche d'oreille, **caractérisé en ce que** les branches longitudinales (30a, 30b) s'appliquent contre les côtés longitudinaux (60) opposés à la charnière (54) des parties de boîtier (50, 51) et les branches d'oreille (40a, 40b) s'appliquent contre les côtés larges (61) de telle sorte que les deux verres de lunettes (1a, 1b) et les branches (30a, 30b, 40a, 40b) soient disposés dans l'état complètement ouvert de l'étui à lunettes dans une forme en Z.
